# EUROPEAN PATENT APPLICATION

(11) **EP 4 650 392 A1**
(43) Date of publication of application: **19.11.2025**
(21) Application number: 24819159.5
(22) Date of filing: 22.05.2024
(51) Int. Cl.: C08J 5/18, B32B 27/32

(54) **POLYPROPYLENE-BASED NON-STRETCHED FILM AND LAMINATE USING SAME**

(30) Priority: 06.06.2023 JP 2023092835; 23.06.2023 JP 2023103021
(71) Applicant: Toray Advanced Film Co., Ltd., Tokyo 103-0022 (JP)
(72) Inventor: TOKUDA, Hirotada, Takatsuki-shi, Osaka 569-0807 (JP); TOYOSHIMA, Yutaka, Takatsuki-shi, Osaka 569-0807 (JP); MATSUURA, Youichi, Takatsuki-shi, Osaka 569-0807 (JP); CHUJO, Kazuki, Takatsuki-shi, Osaka 569-0807 (JP)
(74) Representative: Prüfer & Partner mbB Patentanwälte · Rechtsanwälte
(86) International application number: PCT/JP2024/018779
(87) International publication number: WO 2024/252926

(57) **Abstract**

Provided are: a polypropylene-based non-stretched film that has, when used in a packaging bag that is for packaging a retort food and has less number of layers in consideration of the environment, excellent low-temperature heat sealability and high-temperature blocking resistance, excellent bag-making processability, and excellent retort suitability; and a laminate using the same. This polypropylene-based non-stretched film contains, as a main component, a propylene-based random copolymer having a melting temperature peak at 135-145°C, and has, as a heat seal surface on at least one surface, a surface that has a film surface average roughness Ra of at least 0.1 µm and a peak count of at least 100 peaks/10 mm2 for 0.3 µm or higher peaks. Alternatively, the polypropylene-based non-stretched film according to claim 1 is formed of two layers, which are a base layer and a seal layer. The base layer contains at least 50 mass% of a propylene-ethylene block copolymer, and has a melting temperature peak at 150°C or higher. The range of the melting temperature peak of the seal layer is 135-145°C. The polypropylene-based non-stretched film has, as a heat seal surface, a surface in which the seal layer surface has a surface average roughness Ra of at least 0.1 µm, and, in terms of the peak count number RPc, the peak count is at least 100 peaks/10 mm2 for 0.3 µm or higher peaks. In addition, this laminate has laminated therein a heat resistant base material having a melting point of 160°C or higher, and has a heat seal strength of at least 23 N/15 mm at 170°C.

## Description

### TECHNICAL FIELD

The present invention relates to a polypropylene based unstretched film and a laminated sheet formed thereof that are suitable for packaging of retort food products.

### BACKGROUND ART

Laminated sheets and packaging bags for retort food packaging have conventionally been manufactured by laminating a heat resistant base material such as biaxially stretched polyethylene terephthalate film (hereinafter occasionally referred to as PET), biaxially stretched polyamide film (hereinafter occasionally referred to as ON), or aluminum foil (hereinafter occasionally referred to as AL foil) with a heat sealable unstretched polypropylene film (hereinafter occasionally referred to as CPP), thereby forming structures such as PET/ON/CPP and PET/ON/AL foil/CPP and processing these laminated sheets into packaging bags. Such packaging bags are required to have good characteristics in terms of heat resistance, impact resistance, high heat seal strength, blocking resistance, and bag making processability.

In recent years, environmentally conscious design of packaging bags has become essential due to the enforcement of laws related to environmental considerations for packaging. Accordingly, there is an increasing demand for reducing the number of layers in such laminated sheets, and two layer structures such as PET/CPP, ON/CPP, and OPP/CPP are now studied actively. Furthermore, there is increasing demand for packaging bags made of monomaterial high-recyclability films composed of materials of the same type, and in this context, studies have been conducted focusing on laminated sheets composed of a biaxially stretched polypropylene film and an unstretched polypropylene film that form an OPP/CPP structure. However, OPP is lower in heat resistance than PET and ON, and it suffers from poor bag making processability under conventional bag making conditions. Therefore, for the purpose of maintaining a bag making processability generally achieved with conventional materials, there is an increasing demand for unstretched polypropylene films having low temperature heat-sealability, high temperature blocking resistance, and suitability for retort processing.

In order to solve the above problems, Patent document 1 proposes a laminated sheet in which a heat sealing layer is laminated on one side of a biaxially stretched polypropylene film that is high in heat resistance and elastic modulus. However, this laminated sheet still lacks sufficient low temperature heat sealability, high temperature blocking resistance, and suitability for retort processing. Furthermore, Patent document 2 proposes a polypropylene based multilayer sealant film for retort food packaging, in which the heat sealing layer contains inorganic particles to ensure a specified surface roughness. However, this raises concerns regarding the detachment of particles during a film formation step or a lamination processing step, and contamination of food with such particles. In addition, the film lacks sufficient low temperature heat sealability, high temperature blocking resistance, and suitability for retort processing, in serving as a film material, and it is also inferior in bag making processability.

### PRIOR ART DOCUMENTSPATENT DOCUMENTS

Patent document 1: Japanese Unexamined Patent Publication (Kokai) No. 2020-7441
Patent document 2: Japanese Patent No. 5895590

### SUMMARY OF INVENTION PROBLEMS TO BE SOLVED BY THE INVENTION

Thus, the main object of the present invention is to provide a polypropylene based unstretched film and a laminated sheet formed thereof, which are excellent in terms of low temperature heat sealability, high temperature blocking resistance, bag making processability, and suitability for retort processing and accordingly suitable for production of environmentally conscious packaging bags for retort food packaging composed of a reduced number of layers.

### MEANS OF SOLVING THE PROBLEMS

The inventors of the present invention have arrived at a solution to the above problem through the development of a polypropylene based unstretched film and a laminated sheet formed thereof as described below.

Specifically, the present invention provides a polypropylene based unstretched film including, as the main component, a propylene based random copolymer having a melting temperature peak of 135°C or more and 145°C or less, and having, on at least one surface, a heat seal surface having an average surface roughness Ra of 0.1 µm or more and a peak count of 100 or more per 10 mm² for peaks with a height of 0.3 µm or more.

Another aspect of the invention provides a polypropylene based unstretched film including two layers, that is, a base layer and a seal layer, wherein the base layer contains a propylene-ethylene block copolymer in an amount of 50 mass% or more and has a melting temperature peak of 150°C or more whereas the seal layer has a melting temperature peak in the range of 135°C to 145°C, with the surface of the seal layer having an average surface roughness Ra of 0.1 µm or more and a peak count of 100 or more per 10 mm² for peaks with a height of 0.3 µm or more and serving as a heat seal surface.

### ADVANTAGEOUS EFFECTS OF THE INVENTION

If using a polypropylene based unstretched film and a laminated sheet formed thereof, which exhibit excellent low temperature heat sealability and high temperature blocking resistance required for retort food packaging, it becomes possible to provide a packaging bag for retort food packaging that is environmentally conscious and allows for a reduction in the consumption of packaging materials.

### DESCRIPTION OF PREFERRED EMBODIMENTS

Hereinafter, the polypropylene based unstretched film and the laminated sheet formed thereof according to the present invention will be described in detail.

The polypropylene based unstretched film according to the present invention includes, as the main component, a propylene based random copolymer having a melting temperature peak in the range of 135°C to 145°C. Here, "the main component" means that the propylene based random copolymer accounts for 50 mass% or more of the total resin content of the film.

If the proportion of the propylene based random copolymer having a melting temperature peak in the range of 135°C to 145°C is less than 50 mass%, the film may occasionally fail to have a heat seal strength at 170°C of 23 N/15 mm or more, which is necessary for retort food applications, and as a result, problems such as scattering or leakage of the contents may occur when a bag formed of the film is filled with contents and sterilized by heating at 130°C or higher.

If the propylene based random copolymer has a melting temperature peak in the range of 135°C to 145°C, it is preferable because it serves to achieve a heat seal strength at 170°C of 23 N/15 mm or more, which is necessary for retort food applications, and also serves to realize a blocking shear strength at 130°C of 15 N/12 cm² or less.

If its melting temperature peak is less than 135°C, the blocking shear strength at 130°C may occasionally become more than 15 N/12 cm². In the case where its melting temperature peak is more than 145°C, the heat seal onset temperature in a heat sealing process of two heat seal surfaces combined together, namely, the temperature at which the heat seal strength reaches and exceeds 3 N/15 mm, will occasionally be 150°C or more, possibly resulting in a decrease in the bag making speed.

The melt flow rate (hereinafter occasionally referred to as MFR) of the aforementioned propylene based random copolymer is preferably in the range of 0.5 to 100 g/10 min (measured at 230°C under a load of 2.18 N), and more preferably in the range of 2 to 20 g/10 min, since a value in this range allows for stable melt extrusion for film formation.

As the propylene based random copolymer having a melting temperature peak in the range of 135°C to 145°C, it is preferable to use a propylene based random copolymer formed of propylene and one or more comonomers because it serves to realize both a high temperature blocking resistance and a heat seal strength in desired ranges.

Examples of the comonomers include ethylene and an α-olefin having 4 or more carbon atoms. Examples of the aforementioned random copolymer include propylene-ethylene random copolymers, which are formed of propylene and ethylene, random copolymers of propylene and α-olefins having 4 or more carbon atoms, and random copolymers of propylene, ethylene, and an α-olefin having 4 or more carbon atoms. Specific examples of the α-olefin having 4 or more carbon atoms useful to form the aforementioned random copolymer include 1-butene, 4-methylpentene-1,1-octene, and 1-hexene, of which 1-butene is preferable.

From the viewpoint of heat seal strength, the copolymerization proportion of the comonomer is preferably 1 mol% or more and 10 mol% or less. If the copolymerization proportion is less than 1 mol%, it may lead to a low heat seal strength whereas if it is more than 10 mol%, it may lead to deterioration in the slip properties, resulting in wrinkling during a film winding step and film tearing due to blocking during an unwinding step.

For the polypropylene based unstretched film according to the present invention, at least either surface that works as a heat seal surface has an average film surface roughness Ra of 0.1 µm or more. It is preferable that Ra be in the range of 0.2 to 0.7 µm because it allows the film to exhibit good slip properties and excellent process passability during a film formation step and a lamination step.

For the polypropylene based unstretched film according to the present invention, at least either surface that works as a heat seal surface has a peak count of 100 or more per 10 mm² for peaks with a height of 0.3 µm or more. This is preferable because the film in this case is suitable for achieving a blocking shear strength at 130°C of 15 N/12 cm² or less and serves to realize automatic filling of contents into bags while ensuring a high bag openability, enhanced ease of filling bags with contents, and an increased bag making speed. The peak count for peaks with a height of 0.3 µm or more is preferably 300 or more per 10 mm², and more preferably 500 or more per 10 mm².

In order to form a heat seal surface having an average film surface roughness and a peak count for peaks with a height of 0.3 µm or more in the desired ranges, it is preferable that the film surface be free of inorganic particles or organic particles because it serves to avoid problems such as particle detachment during film formation and contamination of the contents with particles.

To form a film surface having an average surface roughness and a peak count for peaks with a height of 0.3 µm or more in the desired ranges, a typical good process involves blending the aforementioned propylene based random copolymer with at least one type of polyethylene and an organic peroxide based crosslinking agent, performing their extrusion at high temperature and high shear to prepare chips, and then using those chips to produce a film via a T-die type film forming machine or an inflation film forming machine.

Examples of the aforementioned polyethylene include low density polyethylene having a density of 0.900 g/cm³ or more and less than 0.945 g/cm³, and high density polyethylene having a density of 0.945 g/cm³ or more and less than 0.970 g/cm³. When polyethylene having a density of less than 0.900 g/cm³ is added, it may be impossible in some cases to produce a film having an average film surface roughness and a peak count in the desired ranges specified above.

As the aforementioned low density polyethylene, it is preferable to adopt a linear low density polyethylene (hereinafter occasionally referred to as LLDPE) in the form of a copolymer of ethylene and an α-olefin because of its high dispersibility in a propylene based random copolymer and ease of achieving a peak count of 100 or more per 10 mm² for peaks with a height of 0.3 µm or more. Examples of the α-olefin used to form the linear low density polyethylene include 1-butene, 1-hexene, and 1-octene.

The melting temperature peak of the polyethylene is preferably 100°C or more and less than 140°C, and more preferably 120°C or more and less than 140°C, from the viewpoint of the heat seal strength and the blocking shear strength at 130°C.

The melt flow rate of the polyethylene measured according to JIS K7210 (1999) at 190°C under a load of 21.18 N is preferably in the range of 0.2 to 10 g/10 min, and more preferably 0.5 to 5 g/10 min, because it ensures a high dispersibility in the aforementioned propylene based random copolymer and facilitates the achievement of an average film surface roughness and a peak count for peaks with a height of 0.3 µm or more in the desired ranges specified above.

The mixing percentage of the linear low density polyethylene (LLDPE) in the propylene based random copolymer is preferably less than 50 mass%, more preferably 5 to 40 mass%, and still more preferably 10 to 30 mass%. This is preferable because it allows for easier achievement an average film surface roughness and a peak count for peaks with a height of 0.3 µm or more in the desired ranges specified above and helps to realize a blocking shear strength at 130°C of 15 N/12 cm² or less.

It is preferable that the amount of the organic peroxide to be added account for a proportion in the range of 0.1 to 10 mass% relative to the resin components, and more preferably 0.5 to 5 mass%. This is preferable because it ensures a high dispersibility in the resin, enhances the effect of the crosslinking agent on the polyethylene, and facilitates the achievement of an average film surface roughness and a peak count for peaks with a height of 0.3 µm or more in the desired ranges specified above. If the amount added accounts for less than 1 mass%, the intended effect may not be realized whereas if it accounts for more than 40 mass%, poor dispersion tends to occur, possibly leading to deterioration in extrudability.

The organic peroxide to use is not particularly limited, and examples include alkyl peroxides, diacyl peroxides, peroxy esters, and peroxy carbonates. Examples of alkyl peroxides include dicumyl peroxide, di-tert-butyl peroxide, di-tert-butylcumyl peroxide, 2,5-dimethyl-2,5-di(tert-butylperoxy)hexane, 2,5-dimethyl-2,5-di(tert-butylperoxy)hexyne-3, tert-butylcumyl, 1,3-bis(tert-butylperoxyisopropyl)benzene, and 3,6,9-triethyl-3,6,9-trimethyl-1,4,7-triperoxonan.

Examples of diacyl peroxides include benzoyl peroxide, lauroyl peroxide, and decanoyl peroxide. Examples of peroxy esters include 1,1,3,3-tetramethylbutyl peroxyneodecanoate, α-cumyl peroxyneodecanoate, tert-butyl peroxyneodecanoate, tert-butyl peroxyneoheptanoate, tert-butyl peroxypivalate, tert-hexyl peroxypivalate, 1,1,3,3-tetramethylbutyl peroxy-2-ethylhexanoate, tert-amyl peroxy-2-ethylhexanoate, tert-butyl peroxy-2-ethylhexanoate, tert-butyl peroxyisobutyrate, di-tert-butyl peroxyhexahydroterephthalate, tert-amyl peroxy-3,5,5-trimethylhexanoate, tert-butyl peroxy-3,5,5-trimethylhexanoate, tert-butyl peroxyacetate, tert-butyl peroxybenzoate, and dibutyl peroxytrimethyladipate.

Examples of peroxy carbonates include di-3-methoxybutyl peroxydicarbonate, di(2-ethylhexyl) peroxydicarbonate, diisopropyl peroxydicarbonate, tert-butyl peroxyisopropyl carbonate, di(4-tert-butylcyclohexyl) peroxydicarbonate, dicetyl peroxydicarbonate, and dimyristyl peroxydicarbonate.

It is preferable, from the viewpoint of food hygiene in retort food packaging, that the organic peroxides mentioned above should not remain in the polypropylene based unstretched film according to the present invention.

Another method for achieving an average film surface roughness Ra and a peak count for peaks with a height of 0.3 µm or more in the desired ranges is to emboss either surface (the heat seal surface) of the film using a film-forming nip roller. There are no specific limitations on the film-forming nip roller to use as long as it serves to form a suitable heat seal surface for the present invention, and for example, the film-forming nip rollers disclosed in International Publication WO 2013/80925 and Japanese Unexamined Patent Publication (Kokai) No. 2020-55189 can be used suitably. More specifically, it is preferable to adopt an embossing nip roller that has an arithmetic average roughness Ra of 0.2 µm or less, a ten point average roughness Rz of 2 to 8 µm, and an average surface irregularity interval Sm of 90 µm or less.

For the polypropylene based unstretched film according to the present invention, it is preferable that two heat seal surfaces combined together exhibit a blocking shear strength at 130°C of 15 N/12 cm² or less. In that case, the film enables automatic filling of contents into bags while ensuring a high bag openability and enhanced ease of filling bags with contents. If the blocking shear strength at 130°C is more than 15 N/12 cm², the bag may fail to open sufficiently during automatic filling of contents into the bag produced, leading to spillage of contents and reduced bag making speed.

Furthermore, in the case of the production of a packaging bag such as pouch that involves a step where two heat seal surfaces are combined together and heat-sealed, the heat seal onset temperature, namely, the temperature at which the heat seal strength reaches and exceeds 3 N/15 mm, is preferably 150°C or less, more preferably 145°C or less.

The bag making speed is preferably 40 spm or more, more preferably 45 spm or more. If the bag making speed is less than 40 spm, it is not preferable because it can occasionally lead to a poor product yield and higher production cost.

For the polypropylene based unstretched film according to the present invention, it is preferable to further add a thermoplastic elastomer as long as the blocking shear strength at 130°C and the heat seal strength are maintained in the desired ranges for the present invention because it serves to improve the low temperature heat sealability and impact resistance.

It is preferable for the thermoplastic elastomer to account for 5 mass% or more and 40 mass% or less. If its content is less than 5 mass%, it may occasionally fail to realize a significant increase in the low temperature heat sealability and impact resistance, whereas if it is more than 40 mass%, it may occasionally cause a liquid leakage from the packaging bag due to an excessive decrease in the heat seal strength during retort processing or heating in a microwave oven etc.

The thermoplastic elastomer is preferably in the form of a copolymer composed of 55 to 95 mass% of ethylene or propylene as the main component and 5 to 45 mass% of an α-olefin as a comonomer. Specifically, it is preferably one produced using a metallocene based catalyst.

Useful examples of the aforementioned α-olefin include those having 2 to 10 carbon atoms, such as ethylene, propylene, 1-butene, 1-hexene, and 1-octene, while specific examples of the thermoplastic elastomer include ethylene-propylene copolymer elastomers, ethylene-butene copolymer elastomers, ethylene-octene copolymer elastomers, propylene-ethylene copolymer elastomers, propylene-butene copolymer elastomers, propylene-hexene copolymer elastomers, and propylene-octene copolymer elastomers. In particular, it is preferable to further include an elastomer containing propylene as the main component in order to ensure a desired heat seal strength and low temperature impact resistance.

It is preferable for the thermoplastic elastomer to have an MFR in the range of 0.5 to 10 g/10 min as measured at 190°C under a load of 21.18 N from the viewpoint of compatibility with the propylene based random copolymer and blocking resistance.

The polypropylene based unstretched film according to the present invention includes two layers, that is, a base layer and a seal layer made of the polypropylene based unstretched film, wherein the base layer contains a propylene-ethylene block copolymer in an amount of 50 mass% or more and has a melting temperature peak of 150°C or more while the seal layer has a melting temperature peak in the range of 135°C to 145°C, having an average surface roughness Ra of 0.1 µm or more as determined based on the roughness curve elements of the seal layer, and having a peak count of 100 or more per 10mm² for peaks with a height of 0.3 µm or more in terms of the peak count number Rpc based on the roughness curve elements.

It is preferable that the base layer contain a propylene-ethylene block copolymer in an amount of 50 mass% or more. In the case where the propylene-ethylene block copolymer is combined with a heat resistant base material to form a laminated sheet intended for bag production, the resulting bag may occasionally have poor low temperature impact resistance if the copolymer accounts for less than 50 mass%.

In order to form a laminated sheet having suitable properties for the present invention, it is preferable that for the propylene-ethylene block copolymer, the xylene soluble part CXS at 20°C have an intrinsic viscosity [η]CXS of 2.5 dl/g or more and 3.5 dl/g or less, that the xylene soluble part CXS at 20°C account for 10 mass% or more and 25.0 mass% or less, and that the xylene insoluble part CXIS at 20°C have an intrinsic viscosity [η]CXIS of 1.5 dl/g or more and 2.2 dl/g or less.

In regard to the xylene insoluble part CXIS at 20°C and the xylene soluble part CXS at 20°C referred to herein, the polypropylene based film is completely dissolved in boiling xylene, then cooled to 20°C and left to stand for at least 4 hours, followed by filtering the resulting mixture to separate a precipitate and a solution. The precipitate is referred to as the 20°C xylene insoluble part CXIS (hereinafter occasionally referred to as xylene insoluble part CXIS) while the component obtained by evaporating the solvent from the solution (filtrate) and drying the residue under reduced pressure at 70°C is referred to as the 20°C xylene soluble part CXS (hereinafter occasionally referred to as xylene soluble part CXS).

The 20°C xylene insoluble part CXIS corresponds to the polypropylene homopolymer, and the 20°C xylene soluble part CXS corresponds to the rubber component.

If the content of the 20°C xylene soluble part CXS in the base layer is less than 10 mass%, it may occasionally lead to an inferior low temperature impact resistance and a poor steam permeability due to an insufficient decrease in the heat seal strength of the laminated sheet at 100°C, whereas if it is more than 25.0 mass%, it may occasionally lead to a liquid leakage from the packaging bag during heating in a microwave oven etc. due to an excessive decrease in the heat seal strength at 100°C. It is preferable that the CXS account for 8 mass% or more and 20.0 mass% or less.

If the intrinsic viscosity ([η]CXS) of the 20°C xylene soluble part CXS in the base layer is less than 2.5 dl/g, it may occasionally lead to a decrease in the low temperature impact resistance, whereas if it is more than 3.5 dl/g, it may occasionally lead to a decrease in the dispersibility in the xylene insoluble part CXIS and result in poor melt extrudability.

On the other hand, if the intrinsic viscosity ([η]CXIS) of the 20°C xylene insoluble part CXIS in the polypropylene based film is less than 1.5 dl/g, it may occasionally lead to a decrease in the low temperature impact resistance, whereas if it is more than 2.2 dl/g, it may occasionally lead to a decrease in the dispersibility of the xylene soluble part CXS.

The melt flow rate (hereinafter occasionally referred to as MFR) of the aforementioned propylene-ethylene block copolymer is preferably in the range of 0.5 to 10 g/10 min as measured at 230°C under a load of 21.18 N from the viewpoint of extrusion stability and low temperature impact resistance.

It is preferable that the base layer contain a propylene-ethylene random copolymer in an amount of 10 mass% or more and less than 50 mass% because this allows for suitable adjustment of the low temperature impact resistance and heat seal strength of the laminated sheet for retort packaging.

It is preferable for the propylene-ethylene random copolymer to have an ethylene content of 1 mass% or more and 7 mass% or less because it ensures good compatibility with the propylene-ethylene block copolymer.

It is preferable for the propylene-ethylene random copolymer to have an MFR in the range of 0.5 to 10 g/10 min as measured at 230°C under a load of 21.18 N from the viewpoint of extrusion stability and melt compatibility with the propylene-ethylene block copolymer.

It is preferable for the base layer to contain an ethylene-α-olefin copolymer in an amount of 10 mass% or more and 40 mass% or less (relative to the total mass of resin components in the base layer, which accounts for 100 mass%) because in such a case, it allows for appropriate adjustment of steam permeability during heating in a microwave oven.

If the content of the ethylene-α-olefin copolymer is less than 10 mass%, it may occasionally fail to have a desirable effect on the steam permeability during heating in a microwave oven, whereas if it is more than 40 mass%, it may occasionally lead to a liquid leakage from the packaging bag during retort processing or heating in a microwave oven etc. due to an excessive decrease in the heat seal strength.

The melting point of the ethylene-α-olefin copolymer is preferably 110°C or more and 140°C or less. If the melting point is less than 110°C, it may occasionally lead to a decrease in the heat seal strength at high temperatures to cause the packaging bag to break, whereas if it is more than 140°C, it may occasionally lead to an increase in the heat seal strength at high temperatures to cause a decrease in the steam permeability during heating in a microwave oven.

The ethylene-α-olefin copolymer is a copolymer that includes 50 to 95 mass% ethylene as the main component and an α-olefin as a comonomer, and specifically, it is preferably one produced using a metallocene based catalyst.

Useful examples of the α-olefin include those having 4 to 10 carbon atoms, such as 1-butene, 1-hexene, and 1-octene, and specifically, it is preferably a linear low density polyethylene (hereinafter occasionally referred to as LLDPE).

It is preferable for the ethylene-α-olefin copolymer to have an MFR in the range of 0.5 to 10 g/10 min as measured at 190°C under a load of 21.18 N from the viewpoint of compatibility with propylene based resins and blocking resistance.

For the polypropylene based unstretched film, it is preferable to further add a thermoplastic elastomer because it serves to improve the low temperature heat sealability and impact resistance.

It is preferable for the thermoplastic elastomer to account for 5 mass% or more and 40 mass% or less. If its content is less than 5 mass%, it may occasionally fail to realize a significant increase in the low temperature heat sealability and impact resistance, whereas if it is more than 40 mass%, it may occasionally lead to a liquid leakage from the packaging bag due to an excessive decrease in the heat seal strength during retort processing or heating in a microwave oven etc.

The thermoplastic elastomer is preferably in the form of a copolymer composed of 55 to 95 mass% ethylene or propylene as the main component and 5 to 45 mass% α-olefin as a comonomer. Specifically, it is preferably one produced using a metallocene based catalyst.

Useful examples of the aforementioned α-olefin include those having 2 to 10 carbon atoms, such as ethylene, propylene, 1-butene, 1-hexene, and 1-octene, while specific examples of the thermoplastic elastomer include ethylene-propylene copolymer elastomers, ethylene-butene copolymer elastomers, ethylene-octene copolymer elastomers, propylene-ethylene copolymer elastomers, propylene-butene copolymer elastomers, propylene-hexene copolymer elastomers, and propylene-octene copolymer elastomers. In particular, it is preferable to further add an elastomer containing propylene as the main component in order to ensure a desired heat seal strength and low temperature impact resistance.

The MFR of the thermoplastic elastomer is preferably in the range of 0.5 to 10 g/10 min as measured at 190°C under a load of 21.18 N in the case of an elastomer containing ethylene as the main component whereas it is preferably in the range of 0.5 to 10 g/10 min as measured at 230°C under a load of 21.18 N in the case of an elastomer containing propylene as the main component, from the viewpoint of the compatibility with the polypropylene based resin present as the main component of the seal layer and the film forming stability.

The polypropylene based unstretched film according to the present invention may also include various additives such as antioxidants, thermal stabilizers, neutralizing agents, antistatic agents, hydrochloric acid absorbents, antiblocking agents, and lubricant, as long as they do not impair the purposes of the present invention. Each of these additives may be used singly or two or more thereof may be used in combination.

Specific examples of the antioxidants include hindered phenol based ones such as 2,6-di-tert-butylphenol (BHT), n-octadecyl-3-(3',5'-di-tert-butyl-4'-hydroxyphenyl)propionate (Irganox 1076, Sumilizer BP-76), tetrakis[methylene-3-(3,5-di-tert-butyl-4-hydroxyphenyl)propionate]methane (Irganox 1010, Sumilizer BP-101), and tris(3,5-di-tert-butyl-4-hydroxybenzyl)isocyanurate (Irganox 3114, Mark AO-20).

Examples of phosphite based (phosphorus based) antioxidants include tris(2,4-di-tert-butylphenyl) phosphite (Irgafos 168, Mark 2112), tetrakis(2,4-di-tert-butylphenyl)-4,4'-biphenylene-diphosphonite (Sandstab P-EPQ), bis(2,4-di-tert-butylphenyl)pentaerythritol diphosphite (Ultranox 626, Mark PEP-24G), and distearylpentaerythritol diphosphite (Mark PEP-8).

In particular, it is preferable to use 6-[3-(3-tert-butyl-4-hydroxy-5-methyl)propoxy]-2,4,8,10-tetra-tert-butyldibenz[d,f][1,3,2]-dioxaphosphepin (Sumilizer GP) and 2-[1-[2-hydroxy-3,5-di-tert-pentylphenyl]ethyl]-4,6-di-tert-pentylphenyl acrylate (Sumilizer GS) because they have both functions characteristic of hindered phenol based antioxidants and those characteristic of phosphite based antioxidants, and the combined use of these two substances is particularly preferable because it can work effectively in suppressing the resin degradation during film formation and contribute to realizing both high heat seal strength and blocking resistance simultaneously.

The amount of the antioxidant to be added may be appropriately set depending on the type of antioxidant used, though preferably in the range of 100 to 10,000 ppm.

Examples of neutralizing agents include hydrotalcite type compounds and calcium hydroxide because they are effective in reducing smoke generation during film formation.

For the polypropylene based unstretched film according to the present invention, a fatty acid amide based lubricant may be added in an amount of 100 to 1,000 ppm relative to the total amount of the resin composition as long as it does not cause a deterioration in the film formability brought about by contamination in the film formation step due to thermal scattering during melt extrusion, nor cause a decrease in the heat seal strength. If the amount of the fatty acid amide based lubricant added is less than 100 ppm, slip properties may deteriorate, whereas if it is more than 1,000 ppm, thermal scattering during melt extrusion may increase, thereby contaminating the film forming step to cause a deterioration in film formability and a decrease in the heat seal strength.

Examples of the fatty acid amide based lubricant include oleic acid amide, erucic acid amide, stearic acid amide, palmitic acid amide, and behenic acid amide.

Useful methods for producing the polypropylene based unstretched film according to the present invention includes, for example, a process in which resins and additives as listed above are melted and kneaded in a single screw extruder, a co-rotating twin screw extruder, or a counter-rotating twin screw extruder, followed by extrusion through a T-die onto a cooling drum for cooling and solidification, and a process in which they are melt-extruded on a heat resistant base material, followed by lamination. For the present invention, however, a process involving their extrusion from a T-die onto a cooling drum to achieve cooling for solidification is preferable because this ensures a higher heat seal strength.

The film thickness of the aforementioned polypropylene based unstretched film is preferably 20 µm or more and 150 µm or less, and the thickness ratio between the base layer and the seal layer is preferably in the range of 9:1 to 3:1. If they are in these ranges, it serves to realize stable film formability, low temperature impact resistance, and heat seal strength of the film while maintaining a high bag formability.

When a laminated sheet is formed by combining the polypropylene based unstretched film according to the present invention and a heat resistant base material having a melting point of 160°C or more, its heat seal strength at 170°C is preferably 23 N/15 mm or more. If its heat seal strength at 170°C is less than 23 N/15 mm, the heat seal strength may occasionally deteriorate when undergoing heat treatment at 130°C or more during use as a retort packaging material, possibly resulting in scattering or leakage of the contents.

As the aforementioned heat resistant base material having a melting point of 160°C or more, it is preferable to use at least one selected from the following: a film selected from the group consisting of biaxially stretched polyamide films, biaxially stretched polyethylene terephthalate films, biaxially stretched polypropylene films, biaxially stretched polybutylene terephthalate films, biaxially stretched polyester/polyamide hybrid films, uniaxially stretched polyamide films, uniaxially stretched polyethylene terephthalate films, uniaxially stretched polypropylene films, and uniaxially stretched polybutylene terephthalate films; one film thereof having a gas barrier layer formed by metal vapor deposition, inorganic vapor deposition, transparent metal oxide vapor deposition, or gas barrier resin coating; and synthetic paper and aluminum foil. As a monomaterial base material layer, it is preferable to use a biaxially stretched polypropylene film or a uniaxially stretched polypropylene film.

The method to use for laminating a heat resistant base material as listed above and the polypropylene based unstretched film according to the present invention is not particularly limited, but the use of a dry lamination method is preferable from the viewpoint of productivity.

Although the dry lamination adhesive to use is not particularly limited, good examples thereof include two-component reactive type aromatic adhesives composed of one or more polyols, as a first liquid, selected from the group consisting of polyurethane based polyols, polyester based polyols, and polyether based polyols, and an isocyanate as a second liquid (curing agent), and others such as two-component reactive type aliphatic adhesives, polyurethane based adhesives, acrylic based adhesives, epoxy based adhesives, polyolefin based adhesives, elastomer based adhesives, and fluorine based adhesives.

The adhesive layer preferably has a thickness of 0.5 to 5 µm, more preferably 0.5 to 3 µm. If the adhesive layer has a thickness of 0.5 µm or more, it will be easier to implement film thickness control, whereas if it is 5 µm or less, it will be easier to shorten the drying time and suppress production cost increase while realizing sufficient adhesive strength.

The aforementioned laminated sheet can serve to fabricate a flat bag (flat-type pouch), standing pouch, or the like, that includes the polypropylene based unstretched film according to the present invention working as the heat seal surface inside the bag.

### EXAMPLES

The present invention will be illustrated below in detail with reference to examples, although the invention should not be construed as being limited thereto. Here, the measurements mentioned in the detailed description of the present invention and evaluations made in the examples were carried out using the methods described below.

### (1) Melting temperature peak

Using a differential scanning calorimeter (DSC-60, manufactured by Shimadzu Corporation), a sample was heated from 20°C to 250°C at a rate of 10°C/min, and among the melting peaks observed during this heating step, the temperature of the highest peak was adopted as the melting temperature peak.

### (2) Density of polyethylene (in g/cm³)

Measurement was performed in accordance with Method A (water displacement method) specified in JIS K7112:1999.

### (3) Melt flow rate (MFR)

Measurement was performed in accordance with JIS K7210:1999 at 230°C for propylene based random copolymers, propylene-ethylene block copolymers, and propylene-α-olefin copolymer elastomers, and at 190°C for polyethylene based resins and ethylene-α-olefin copolymer elastomers, all under a load of 21.18 N.

### (4) Content of 20°C xylene soluble part CXS and xylene insoluble part CXIS

A 5 g film or polymer sample was completely dissolved in 500 mL of boiling xylene (first grade, manufactured by Kanto Chemical Co., Inc.), and the resulting solution was cooled to 20°C and left to stand for 4 hours or more. Then, the solution was filtered for separation into a precipitate and a filtrate, which were to be used as the xylene soluble part and the xylene insoluble part. The mass of the xylene insoluble part was determined by drying the precipitate under reduced pressure at 70°C and measuring its mass at 23°C, followed by calculating the content (mass%). Meanwhile, the mass of the xylene soluble part CXS was determined by evaporating the solvent completely from the filtrate under reduced pressure at 70°C and measuring the mass of the dry residue, followed by calculating the content (mass%).

### (5) Intrinsic viscosity of xylene insoluble part CXIS and soluble part CXS of film and polymer

For a sample separated by the procedure described above, measurement was performed in tetralin at 135°C using an Ubbelohde type viscometer.

### (6) Ethylene content

Measurement was performed by infrared spectroscopy according to the procedure described on and after page 616 of the Handbook of Polymer Analysis (1995, published by Kinokuniya Company, Ltd.), followed by calculating the content.

The ethylene content (mass%) in the 20°C xylene soluble part of the propylene-ethylene block copolymer (a) was calculated by the equation given below. Ethylene content in 20°C xylene soluble part = {(ethylene content in (a)) - (ethylene content in 20°C xylene insoluble part) × (content of insoluble part in (a))} × 100 / (content of 20°C xylene soluble part in (a)) (content represented in mass%)

### (7) Density of polyethylene (in g/cm³)

Measurement was performed in accordance with Method A (water displacement method) specified in JIS K7112:1999.

### (8) Average film surface roughness Ra and peak count for peaks with height of 0.3 µm or more in terms of peak count number RPc based on roughness curve elements

Using a fully automatic micro-surface profiler (SURFCORDER ET4000A, manufactured by Kosaka Laboratory Ltd.), surface analysis was conducted for the surface of the film in the direction (TD) perpendicular to the flow direction of the film according to the measuring procedure specified in JIS B-0601:1982 to determine the average film surface roughness Ra and the peak count for peaks with a height of 0.3 µm or more in terms of peak count number RPc based on roughness curve elements.
Measuring length: 2 mm
Measuring length in Y-direction: 10 mm
Measuring interval in Y-direction: 0.1 mm
Number of scans: 100

### (9) Thickness and thickness structure of film

To determine the film thickness, measurement of thickness was performed at randomly selected 10 points on a sample according to Method A-2 specified in JIS K7130 (1992) using a dial gauge. The average of the measurements taken was adopted as the thickness of the film.

### (10) Temperature for heat seal strength to reach and exceed 3 N/15 mm

In accordance with JIS Z1713:1999, samples were prepared by combining two polypropylene based unstretched films with their heat sealing surfaces facing each other and heat-sealed at varying heat sealing temperatures. Then, their heat seal strength was measured using a Tensilon tester manufactured by Orientec at a peel speed of 300 mm/min. A sample was rated as good in terms of low temperature heat sealability if the seal onset temperature, namely, the temperature at which the heat seal strength measured at 23°C by the above method, reaches and exceeds 3 N/15 mm, was 150°C or less.

### (11) Heat seal strength at 170°C

A heat resistant base layer and a polypropylene based unstretched film were bonded to each other by the ordinary dry lamination method using an aliphatic ester based adhesive (Takelac A385/Takenate A50, manufactured by Mitsui Chemicals, Inc., adhesive layer thickness 2.5 µm), followed by aging for 3 days at 40°C. Laminated sheets were prepared in this way. Two of these laminated sheets were combined with the polypropylene based unstretched films facing each other and heat-sealed at 170°C to provide a sample, and its heat seal strength was measured using a Tensilon tester manufactured by Orientec at a peel speed of 300 mm/min. A sample having a heat seal strength of 23 N/15 mm or more was judged to be suitable for retort packaging.

### (12) Blocking shear strength at 130°C

Film samples with a width of 30 mm and a length of 100 mm were prepared from a polypropylene based unstretched film and combined with their seal surfaces facing each other in such a manner that they overlapped each other in a 30 mm × 40 mm area. Then, with a 10 g load applied on them, they were heat-treated for 30 minutes in an oven at 130°C and left to stand for more than 30 minutes in an atmosphere maintained at 23°C and 65% humidity, followed by shear peel strength measurement at a peel speed of 300 mm/min using a Tensilon tester manufactured by Orientec. A test piece was rated as good in terms of high temperature blocking resistance if it showed a shear peel strength of 15 N/12 cm² or less when measured by the method described above.

### (13) Bag making speed

A heat resistant base layer and a polypropylene based unstretched film were bonded to each other by the ordinary dry lamination method using an aliphatic ester based adhesive (Takelac A385/Takenate A50, manufactured by Mitsui Chemicals, Inc., adhesive layer thickness 2.5 µm), followed by aging for 3 days at 40°C. Long laminated sheets were prepared in this way. Then, packaging bags were produced from these laminated sheets under the conditions of a bottom seal temperature (bottom part) of 140°C or more and 230°C or less, a longitudinal seal temperature of 130°C or more and 230°C or less, and a top seal temperature (top part to be sealed after filling of contents) of 130°C or more and 230°C or less, depending on the type of the heat resistant base material, while filling the bags with 200 g per minute of saline as contents. A film was rated as good in terms of high speed bag formability if the bag making speed in terms of the number of bags produced per minute (in shots per minute, abbreviated as spm) is 40 spm or more.

### (14) Bag opening retention rate (low temperature impact resistance)

A polypropylene based unstretched film with a thickness of 60 µm was bonded to one side of a heat resistant base layer of a biaxially stretched polyamide film with a thickness of 15 µm by the ordinary dry lamination method using an aliphatic ester based adhesive (Takelac A385/Takenate A50, manufactured by Mitsui Chemicals, Inc., adhesive layer thickness 2.5 µm), followed by aging for 3 days at 40°C. Laminated sheets were prepared in this way.

Using these laminated sheets, a three-side seal bag with a length of 150 mm and a width of 130 mm was formed by heat-sealing three edges at 210°C. After filling the bag with 160 g of saline, it was sealed at 210°C using an impulse sealer to provide a filled packaging bag. The resulting filled packaging bag was subjected to a drop impact test using a DuPont type tester. Specifically, in a 5°C environment, a 1 kg load plate (bottom size 152 mm × 152 mm) was dropped from a height of 20 cm ten times, followed by calculating the bag opening retention rate. Laminated sheets showing a bag opening retention rate of 50% or more free of liquid leakage were rated as good in terms of low temperature impact resistance, whereas those suffering from breakage of the bag or leakage of liquid from sealed portions and showed a bag opening retention rate of less than 50% were judged to be inferior in terms of low temperature impact resistance.

### (15) Heat seal strength in atmosphere at 100°C (steam permeability during heating in microwave oven)

Bags prepared as in the above paragraph (14) were subjected to heat seal strength measurement at a peel speed of 300 mm/min in an atmosphere at 100°C using a Tensilon tester manufactured by Orientec. A bag was rated as good in terms of steam permeability during heating in a microwave oven if it was 30 N/15 mm or less, whereas a bag was rated as inferior in terms of steam permeability if it was 30 N/15 mm or more.

Described below are the various raw material formulations that were used for the present invention. The properties of the polypropylene based unstretched films and laminated sheets prepared from these formulations are summarized in Table 1.

(1) Propylene-ethylene block copolymer (a1)
   MFR: 2.1 g/10 min (230°C)
   CXS content: 20 wt%
   [η]CXIS: 1.8 dl/g
   [η]CXS: 3.2 dl/g
   Melting temperature peak: 163°C
(2) Propylene-ethylene block copolymer (a2)
   MFR: 2.7 g/10 min (230°C)
   CXS content: 27 wt%
   [η]CXIS: 1.9 dl/g
   [η]CXS: 3.0 dl/g
   Melting temperature peak: 155°C
(3) Propylene based random copolymer (a3)
   Ethylene-propylene random copolymer
   Ethylene content: 4 mass%
   MFR: 3.0 g/10 min (230°C)
   Melting temperature peak: 142°C
(4) Propylene based random copolymer (a4)
   Ethylene-propylene random copolymer
   Ethylene content: 6 mass%
   MFR: 3.0 g/10 min (230°C)
   Melting temperature peak: 135°C
(5) Propylene based random copolymer (a5)
   Ethylene-propylene-butene random copolymer
   Propylene content: 90.7 mass%, ethylene content: 2.5 mass%, butene content: 6.8 mass%
   MFR: 3.5 g/10 min (230°C)
   Melting temperature peak: 132°C
(6) Polyethylene (b1)
   Linear low density polyethylene copolymerized with 1-octene
   MFR: 0.8 g/10 min (190°C)
   Density: 0.925 g/cm³
   Melting temperature peak: 125°C
(7) Polyethylene (b2)
   High density polyethylene
   MFR: 1.1 g/10 min (190°C)
   Density: 0.950 g/cm³
   Melting temperature peak: 132°C
(8) Polyethylene (b3)
   Low density polyethylene prepared by high pressure method
   MFR: 7.0g/10 min (190°C), density: 0.905 g/cm³
   Melting temperature peak: 106°C
(9) Ethylene-butene copolymer elastomer (c1)
   TAFMER (registered trademark), manufactured by Mitsui Chemicals, Inc.
   MFR: 3.6 g/10 min (190°C)
   Melting temperature peak: 66°C
(10) Propylene-butene copolymer elastomer (c2)
   TAFMER (registered trademark), manufactured by Mitsui Chemicals, Inc.
   MFR: 7 g/10 min (230°C)
   Melting temperature peak: 75°C

### [Example 1]

For the components of a polypropylene based unstretched film, the ethylene-propylene random copolymer adopted as the propylene based random copolymer (a3), which was sufficiently cooled with liquid nitrogen and pulverized with an impeller mill into a powder form, was used in an amount of 67.6 mass%, and the linear low density polyethylene adopted as the polyethylene (b1) was used in an amount of 30 mass%, with Perhexa 25B (manufactured by NOF Corporation, chemical name 2,5-dimethyl-2,5-di(t-butylperoxy)hexane) used as a peroxide in an amount of 2.4 mass%.

To 100 parts by mass of a mixture of the above components, 0.05 part by mass of tetrakis[methylene-3-(3,5-di-t-butyl-4-hydroxyphenyl)propionate]methane (Sumilizer BP-101) and 0.01 part by mass of Irganox 1076 (manufactured by Ciba Specialty Chemicals) were added and mixed for 3 minutes using a Henschel mixer.

Subsequently, the mixture was fed into a twin screw extruder with a temperature adjusted to 260°C for melt-kneading, and the melt was extruded at 250°C through a T-die at a rate of 60 m/min and cooled and solidified by bringing it in contact with a cooling roll maintained at 45°C. Then, one side thereof was subjected to corona discharge treatment to provide a polypropylene based unstretched film with a thickness of 60 µm.

The resulting polypropylene based unstretched film was adhered to a 12 µm thick transparent vapor-deposited biaxially stretched polyethylene terephthalate film (Barrialox SBR2 (registered trademark)), adopted as a heat resistant base material, with an aliphatic ester based adhesive (Takelac A385/Takenate A50, manufactured by Mitsui Chemicals, adhesive layer thickness 2.5 µm) by a conventional dry lamination method, followed by aging at 40°C for 3 days to provide a laminated sheet.

The resulting laminated sheet was subjected to measurement of heat seal strength at 170°C and bag formability evaluation in terms of bag making speed spm (shots per minute) determined by counting the number of bags filled with 200 g of saline as contents produced under the conditions of a bottom seal temperature (bottom part) of 210°C, a longitudinal seal temperature of 210°C, and a top seal temperature (top part to be sealed after filling of contents) of 210°C. Characteristics of the polypropylene based unstretched film obtained above and those of a laminated sheet produced in combination with a heat resistant base material are shown in Table 1.

The resulting polypropylene based unstretched film exhibited a melting temperature peak of 142°C, had a heat seal surface with an average film surface roughness Ra of 0.29 µm, with a peak count of as large as 2,690 per 10 mm² for peaks with a height of 0.3 µm or more. When two of these films were combined with their heat seal surfaces facing each other and heat-sealed, the resulting sample was found to exceed a heat seal strength of 3 N/15 mm at a temperature of 144°C, demonstrating an excellent low temperature heat sealability. It had a blocking shear strength at 130°C of 2.4 N/12 cm², indicating excellent high temperature blocking resistance, and had a high heat seal strength at 170°C of 60 N/15 mm, exhibiting high suitability for retort packaging, and furthermore, the film demonstrated excellent bag formability with a bag making speed of 45 spm, thus satisfying all required performance characteristics for the present invention.

### [Example 2]

Except for using the ethylene-propylene random copolymer adopted as the propylene based random copolymer (a4), instead of the ethylene-propylene random copolymer adopted as the propylene based random copolymer (a3), the same procedure as in Example 1 was carried out to provide a polypropylene based unstretched film. Then, a laminated sheet was produced in the same way as in Example 1 where a commercial biaxially stretched polypropylene film with a thickness of 20 µm (PYLEN Film-OT (registered trademark) P2171) manufactured by Toyobo Co., Ltd. was used as a biaxially stretched polypropylene film to work as the heat resistant base material. The resulting laminated sheet was subjected to measurement of heat seal strength at 170°C and, for determining its bag formability, bag formability evaluation was performed as in Example 1 using a bag making machine under the conditions of a bottom seal temperature (bottom part) of 145°C, a longitudinal seal temperature of 145°C, and a top seal temperature (top part to be sealed after filling of contents) of 150°C.

Characteristics of the polypropylene based unstretched film obtained above and those of a laminated sheet produced in combination with a heat resistant base material are shown in Table 1.

### [Example 3]

Except for, as compared to Example 1, using the ethylene-propylene random copolymer adopted as the propylene based random copolymer (a3) in an amount of 87.6 mass% and the linear low density polyethylene adopted as the polyethylene (b1) in an amount of 10 mass%, the same procedure as in Example 1 was carried out to provide a polypropylene based unstretched film. A laminated sheet was also prepared in the same way as in Example 1. Characteristics of the polypropylene based unstretched film obtained above and those of a laminated sheet produced in combination with a heat resistant base material are shown in Table 1.

### [Example 4]

Except for, as compared to Example 1, using the ethylene-propylene random copolymer adopted as the propylene based random copolymer (a3) in an amount of 89 mass%, the linear low density polyethylene adopted as the polyethylene (b1) in an amount of 10 mass%, and Perhexa 25B (manufactured by NOF Corporation, chemical name 2,5-dimethyl-2,5-di(t-butylperoxy)hexane) as a peroxide in an amount of 1 mass%, which formed a mixture altogether accounting for 100 parts by mass, the same procedure as in Example 1 was carried out to provide a polypropylene based unstretched film. A laminated sheet was also prepared in the same way as in Example 1. Characteristics of the polypropylene based unstretched film obtained above and those of a laminated sheet produced in combination with a heat resistant base material are shown in Table 1.

### [Example 5]

Except for, as compared to Example 1, using the ethylene-propylene random copolymer adopted as the propylene based random copolymer (a3) in an amount of 67.6 mass%, the linear low density polyethylene adopted as the polyethylene (b1) in an amount of 20 mass%, the ethylene-butene copolymer elastomer (c1) in an amount of 10 mass%, and Perhexa 25B (manufactured by NOF Corporation, chemical name 2,5-dimethyl-2,5-di(t-butylperoxy)hexane) as a peroxide in an amount of 2.4 mass%, which formed a mixture altogether accounting for 100 parts by mass, the same procedure as in Example 1 was carried out to provide a polypropylene based unstretched film. A laminated sheet was also prepared in the same way as in Example 1. Characteristics of the polypropylene based unstretched film obtained above and those of a laminated sheet produced in combination with a heat resistant base material are shown in Table 1.

### [Example 6]

As components of a polypropylene based unstretched film, the ethylene-propylene random copolymer adopted as the propylene based random copolymer (a3) in an amount of 70 mass%, the linear low density polyethylene adopted as the polyethylene (b1) in an amount of 20 mass%, and the ethylene-butene copolymer elastomer (c1) in an amount of 10 mass% were combined to form a resin mixture, which altogether accounted for 100 parts by mass, and then 0.05 part by mass of tetrakis[methylene-3-(3,5-di-t-butyl-4-hydroxyphenyl)propionate]methane (Sumilizer BP-101) and 0.01 part by mass of Irganox 1076 (manufactured by Ciba Specialty Chemicals) were added to the above mixture and mixed for 3 minutes using a Henschel mixer.

Subsequently, the mixture was fed into a twin screw extruder having a temperature adjusted to 260°C, melt-kneaded, and extruded between a mirror finished metal roll and an embossing rubber roll, wherein the embossing rubber roll was one formed by coating a stainless steel core containing a heat medium channel with HTV silicone rubber to a thickness of 8 mm and further covered by a PFA heat shrunk tube with a thickness of 0.2 mm, with the PFA surface then buffed and sprayed with steel spheres to produce 1.0 µm deep surface indentations at a rate of 1,400 indentations/10 mm². Thus, a polypropylene based unstretched film with a thickness of 60 µm was obtained. A laminated sheet was also prepared in the same way as in Example 1. Characteristics of the polypropylene based unstretched film obtained above and those of a laminated sheet produced in combination with a heat resistant base material are shown in Table 1.

### [Comparative example 1]

As components of a polypropylene based unstretched film, the ethylene-propylene random copolymer adopted as the propylene based random copolymer (a3) in an amount of 70 mass%, the linear low density polyethylene adopted as the polyethylene (b1) in an amount of 20 mass%, and the ethylene-butene copolymer elastomer (c1) in an amount of 10 mass% were combined to form a resin mixture, which altogether accounted for 100 parts by mass, and then 0.4 part by mass of spherical silica particles with a diameter of 2 µm adopted as inorganic particle component, 0.05 part by mass of tetrakis[methylene-3-(3,5-di-t-butyl-4-hydroxyphenyl)propionate]methane (Sumilizer BP-101), and 0.01 part by mass of Irganox 1076 (manufactured by Ciba Specialty Chemicals) were added to the above mixture and mixed for 3 minutes using a Henschel mixer. Then, the mixture was fed into a twin screw extruder having a temperature adjusted to 260°C, melt-kneaded, extruded at 250°C through a T-die at a rate of 60 m/min, and cooled and solidified by bringing it in contact with a cooling roll maintained at 45°C. Subsequently, one side thereof was subjected to corona discharge treatment to provide a polypropylene based unstretched film with a thickness of 60 µm. A laminated sheet was also prepared in the same way as in Example 1. Characteristics of the polypropylene based unstretched film obtained above and those of a laminated sheet produced in combination with a heat resistant base material are shown in Table 1.

Although the resulting polypropylene based unstretched film exhibited a melting temperature peak of 142°C, it had a heat seal surface with an average roughness Ra of 0.04 µm and a peak count of 68 per 10 mm² for peaks with a height of 0.3 µm or more, which led to a blocking shear strength at 130°C of 42 N/12 cm², indicating an inferior high temperature blocking resistance. As a result, the bag making speed was 35 spm, showing poor bag formability.

### [Comparative example 2]

Except for using the ethylene-propylene-butene random copolymer adopted as the propylene based random copolymer (a5), instead of the ethylene-propylene random copolymer adopted as the propylene based random copolymer (a3), as a component to form a polypropylene based unstretched film, the same procedure as in Example 1 was carried out to provide a polypropylene based unstretched film. A laminated sheet was also prepared in the same way as in Example 1. Characteristics of the polypropylene based unstretched film obtained above and those of a laminated sheet produced in combination with a heat resistant base material are shown in Table 1.

The resulting polypropylene based unstretched film exhibited a melting temperature peak of 132°C, and accordingly, it had a blocking shear strength at 130°C of 17 N/12 cm², indicating an inferior high temperature blocking resistance. The heat seal strength at 170°C was as small as 20 N/15 mm, and accordingly, a leakage of the liquid contents occurred during retort processing performed at 130°C. The bag making speed was also as small as 35 spm, showing poor bag formability.

### [Comparative example 3]

Except for using the high-pressure low density polyethylene adopted as the polyethylene (b3), instead of the linear low density polyethylene adopted as the polyethylene (b1), as a component to form a polypropylene based unstretched film, the same procedure as in Example 1 was carried out to provide a polypropylene based unstretched film. A laminated sheet was also prepared in the same way as in Example 1. Characteristics of the polypropylene based unstretched film obtained above and those of a laminated sheet produced in combination with a heat resistant base material are shown in Table 1.

The resulting polypropylene based unstretched film had an average roughness Ra of as small as 0.08 µm, and the high-pressure low density polyethylene used in combination had a melting temperature of as low as 106°C. As a result, it had a blocking shear strength at 130°C of 25 N/12 cm², indicating an inferior high temperature blocking resistance. The heat seal strength at 170°C was also as small as 20 N/15 mm, resulting in a leakage of the liquid contents during retort processing performed at 130°C. The bag making speed was as small as 37 spm, showing poor bag formability.

### [Comparative example 4]

Except that, as components of a polypropylene based unstretched film, the ethylene-propylene block copolymer adopted as the propylene based block copolymer (a1) in an amount of 85 mass%, a high density polyethylene in an amount of 5 mass%, and the ethylene-butene copolymer elastomer (c1) in an amount of 10 mass% were combined to form a resin mixture, which altogether accounted for 100 parts by mass, the same procedure as in Example 1 was carried out to provide a polypropylene based unstretched film. A laminated sheet was also prepared in the same way as in Example 1. Characteristics of the polypropylene based unstretched film obtained above and those of a laminated sheet produced in combination with a heat resistant base material are shown in Table 1.

Although the resulting polypropylene based unstretched film had an average roughness Ra in the range specified for the present invention, its peak count for peaks with a height of 0.3 µm or more was smaller than the range specified for the present invention and its blocking shear strength at 130°C was 40 N/12 cm², indicating an inferior high temperature blocking resistance. The ethylene-propylene block copolymer, which was contained as the main component, had a high melting temperature of 163°C, and as a result, the temperature at which the heat seal strength reaches and exceeds 3 N/15 mm was as high as 170°C, leading to an inferior low temperature heat sealability. The heat seal strength at 170°C was as small as 4 N/15 mm, and as a result, it was impossible to produce a bag under the bag making conditions specified above.

### [Example 7]

As base layer components to form a polypropylene based unstretched film, the propylene-ethylene block copolymer (a1) in an amount of 50 mass%, the propylene-ethylene random copolymer (a3) in an amount of 20 mass%, and the linear low density polyethylene adopted as the polyethylene based resin (b1) in an amount of 30 mass% were combined to form a resin mixture, which accounted for 100 parts by mass, and 500 ppm of Sumilizer GP and 750 ppm of Sumilizer GS were added as antioxidants and mixed for 3 minutes in a Henschel mixer. Then, the mixture was fed into a twin screw extruder having a temperature adjusted to 260°C and then it was melt-kneaded.

As components to form a seal layer, after sufficient cooling with liquid nitrogen, the propylene-ethylene random copolymer (a3) with a melting temperature peak of 142°C, pulverized with an impeller mill into a powder form, in an amount of 57.5 mass%, the linear low density polyethylene (b1) in an amount of 40 mass% were used in combination with Perhexa 25B (registered trademark) (manufactured by NOF Corporation, chemical name 2,5-dimethyl-2,5-di(t-butylperoxy)hexane) as a peroxide in an amount of 2.5 mass%. To 100 parts by mass of the above mixture, 0.05 part by mass of tetrakis[methylene-3-(3,5-di-t-butyl-4-hydroxyphenyl)propionate] methane (Sumilizer BP-101) and 0.01 part by mass of Irganox 1076 (manufactured by Ciba Specialty Chemicals) were added and mixed for 3 minutes in a Henschel mixer, followed by feeding it into a twin screw extruder having a temperature adjusted to 260°C, where it was melt-kneaded to provide a master chip.

Next, 75 mass% of the above master chip was mixed with 25 mass% of the propylene-ethylene random copolymer (a3) and the mixture was fed into a twin screw extruder with a temperature adjusted to 260°C and melt-kneaded.

Subsequently, the base layer resin and the seal layer resin melt-kneaded above were extruded at a ratio of 6:1 through a multilayer T-die with two layer orifice at 250°C at 60 m/min. The extrudate was cooled and solidified by bringing it into contact with a cooling roll at 45°C, followed by subjecting the base layer surface to corona discharge treatment to provide a polypropylene based unstretched film with a thickness of 60 µm.

The resulting polypropylene based unstretched film was adhered to a biaxially stretched polyamide film with a thickness of 15 µm, adopted as a heat resistant base material, using an aliphatic ester based adhesive (Takelac A385/Takenate A50, manufactured by Mitsui Chemicals, adhesive layer thickness 2.5 µm) by a conventional dry lamination method, followed by aging at 40°C for 3 days to provide a laminated sheet.

The resulting laminated sheet was subjected to measurement of heat seal strength at 170°C and bag formability evaluation in terms of bag making speed spm (shots per minute) determined by counting the number of bags filled with 200 g of saline as contents produced by a bag making machine under the conditions of a bottom seal temperature (bottom part) of 210°C, a longitudinal seal temperature of 210°C, and a top seal temperature (top part to be sealed after filling of contents) of 210°C. Characteristics of the polypropylene based unstretched film obtained above and those of a laminated sheet produced in combination with a heat resistant base material are shown in Table 2.

The resulting polypropylene based unstretched film exhibited favorable low temperature heat sealability, favorable high temperature blocking resistance, favorable heat seal strength at 170°C in a laminated sheet, favorable low temperature impact resistance, favorable bag formability, and favorable steam permeability during heating in a microwave oven, indicating that it satisfied all the required characteristics of the present invention to serve for retort packaging.

### [Example 8]

Except for, as compared to Example 7, forming a base layer using the propylene-ethylene block copolymer (a1) in an amount of 60 mass%, the propylene-ethylene random copolymer (a3) in an amount of 20 mass%, and the linear low density polyethylene (b1) in an amount of 20 mass%, the same procedure as in Example 7 was carried out to provide a polypropylene based unstretched film and a laminated sheet. Characteristics of the polypropylene based unstretched film obtained above and those of a laminated sheet produced in combination with a heat resistant base material are shown in Table 2.

The resulting polypropylene based unstretched film exhibited favorable low temperature heat sealability, favorable high temperature blocking resistance, favorable heat seal strength at 170°C in a laminated sheet, favorable low temperature impact resistance, favorable bag formability, and favorable steam permeability during heating in a microwave oven, indicating that it satisfied all the required characteristics of the present invention to serve for retort packaging.

### [Example 9]

Except for, as compared to Example 7, forming a base layer using the propylene-ethylene block copolymer (a2) with a melting point peak of 155°C, instead of the propylene-ethylene block copolymer (a1) with a melting point peak of 162°C, the same procedure as in Example 1 was carried out to provide a polypropylene based unstretched film. A laminated sheet was also prepared in the same way as in Example 7. Characteristics of the polypropylene based unstretched film obtained above and those of a laminated sheet produced in combination with a heat resistant base material are shown in Table 2.

The resulting polypropylene based unstretched film exhibited favorable low temperature heat sealability, favorable high temperature blocking resistance, favorable heat seal strength at 170°C in a laminated sheet, favorable low temperature impact resistance, favorable bag formability, and favorable steam permeability during heating in a microwave oven, indicating that it satisfied all the required characteristics of the present invention to serve for retort packaging.

### [Example 10]

Except for, as compared to Example 7, forming a seal layer using the propylene-ethylene random copolymer (a4) with a melting point peak of 135°C, instead of the propylene-ethylene random copolymer (a3) with a melting point peak of 142°C, the same procedure as in Example 1 was carried out to provide a polypropylene based unstretched film. A laminated sheet was also prepared in the same way as in Example 7. Characteristics of the polypropylene based unstretched film obtained above and those of a laminated sheet produced in combination with a heat resistant base material are shown in Table 2.

The resulting polypropylene based unstretched film exhibited favorable low temperature heat sealability, favorable high temperature blocking resistance, favorable heat seal strength at 170°C in a laminated sheet, favorable low temperature impact resistance, favorable bag formability, and favorable steam permeability during heating in a microwave oven, indicating that it satisfied all the required characteristics of the present invention to serve for retort packaging.

### [Example 11]

Except for, as compared to Example 7, forming a seal layer using the propylene-ethylene random copolymer (a3) in an amount of 87.5 mass% and the linear low density polyethylene adopted as the polyethylene based resin (b1) in an amount of 10 mass%, the same procedure as in Example 1 was carried out to provide a polypropylene based unstretched film. A laminated sheet was also prepared in the same way as in Example 7. Characteristics of the polypropylene based unstretched film obtained above and those of a laminated sheet produced in combination with a heat resistant base material are shown in Table 2.

The resulting polypropylene based unstretched film exhibited favorable low temperature heat sealability, favorable high temperature blocking resistance, favorable heat seal strength at 170°C in a laminated sheet, favorable low temperature impact resistance, favorable bag formability, and favorable steam permeability during heating in a microwave oven, indicating that it satisfied all the required characteristics of the present invention to serve for retort packaging.

### [Example 12]

Except for, as compared to Example 7, forming a seal layer using the propylene-ethylene random copolymer (a3) in an amount of 89 mass%, the linear low density polyethylene adopted as the polyethylene based resin (b1) in an amount of 10 mass%, and Perhexa 25B in an amount of 1 mass%, which formed a mixture altogether accounting for 100 parts by mass, the same procedure as in Example 1 was carried out to provide a polypropylene based unstretched film. A laminated sheet was also prepared in the same way as in Example 7. Characteristics of the polypropylene based unstretched film obtained above and those of a laminated sheet produced in combination with a heat resistant base material are shown in Table 2.

The resulting polypropylene based unstretched film exhibited favorable low temperature heat sealability, favorable high temperature blocking resistance, favorable heat seal strength at 170°C in a laminated sheet, favorable low temperature impact resistance, favorable bag formability, and favorable steam permeability during heating in a microwave oven, indicating that it satisfied all the required characteristics of the present invention to serve for retort packaging.

### [Example 13]

Except for, as compared to Example 7, forming a seal layer using the propylene-ethylene random copolymer (a1) in an amount of 77.5 mass%, the linear low density polyethylene adopted as the polyethylene based resin (b1) in an amount of 15 mass%, the ethylene-butene copolymer elastomer (c1) in an amount of 5 mass%, and Perhexa 25B in an amount of 2.5 mass%, which formed a mixture altogether accounting for 100 parts by mass, the same procedure as in Example 1 was carried out to provide a polypropylene based unstretched film. A laminated sheet was also prepared in the same way as in Example 7. Characteristics of the polypropylene based unstretched film obtained above and those of a laminated sheet produced in combination with a heat resistant base material are shown in Table 2.

The resulting polypropylene based unstretched film exhibited favorable low temperature heat sealability, favorable high temperature blocking resistance, favorable heat seal strength at 170°C in a laminated sheet, favorable low temperature impact resistance, favorable bag formability, and favorable steam permeability during heating in a microwave oven, indicating that it satisfied all the required characteristics of the present invention to serve for retort packaging.

### [Example 14]

As compared to Example 7, a seal layer was formed using, as its components, the propylene-ethylene random copolymer (a3) in an amount of 60 mass% and the linear low density polyethylene (b1) in an amount of 40 mass%. As antioxidants, 500 ppm of Sumilizer GP and 750 ppm of Sumilizer GS were added to 100 parts by mass of the above components, and the mixture was mixed for 3 minutes in a Henschel mixer and fed into a twin screw extruder having a temperature adjusted to 260°C, where it was melt-kneaded.

Subsequently, it was extruded between a mirror finished metal roll and an embossing rubber roll that was formed by coating a stainless steel core containing a heat medium channel with HTV silicone rubber to a thickness of 8 mm and further covered by a PFA heat shrunk tube with a thickness of 0.2 mm, with the PFA surface then buffed and sprayed with steel spheres to form 1.0 µm deep surface indentations at a rate of 1,400 indentations/10 mm². The extrusion was performed through a multilayer T-die orifice at a rate of 50 m/min in such a manner that the seal layer faced the rubber roller, thereby providing a polypropylene based unstretched film having a thickness of 60 µm. A laminated sheet was also prepared in the same way as in Example 7. Characteristics of the polypropylene based unstretched film obtained above and those of a laminated sheet produced in combination with a heat resistant base material are shown in Table 2.

The resulting polypropylene based unstretched film exhibited favorable low temperature heat sealability, favorable high temperature blocking resistance, favorable heat seal strength at 170°C in a laminated sheet, favorable low temperature impact resistance, favorable bag formability, and favorable steam permeability during heating in a microwave oven, indicating that it satisfied all the required characteristics of the present invention to serve for retort packaging.

### [Example 15]

As compared to Example 7, to form a base layer, 100 parts by mass of a resin mixture was formed by mixing the propylene-ethylene block copolymer (a1) in an amount of 72 mass%, the linear low density polyethylene adopted as the polyethylene based resin (b1) in an amount of 18 mass%, and a propylene-butene copolymer elastomer in an amount of 10 mass%, and adding, as antioxidants, 500 ppm of Sumilizer GP and 750 ppm of Sumilizer GS, followed by mixing them for 3 minutes in a Henschel mixer. The resulting mixture was fed into a twin screw extruder having a temperature adjusted to 260°C and then it was melt-kneaded.

As components to form a seal layer, after sufficient cooling with liquid nitrogen, the propylene-ethylene random copolymer (a3) with a melting temperature peak of 142°C, pulverized with an impeller mill into a powder form, in an amount of 87.5 mass% and the high density polyethylene (b2) in an amount of 10 mass% were used in combination with Perhexa 25B (registered trademark) (manufactured by NOF Corporation, chemical name 2,5-dimethyl-2,5-di(t-butylperoxy)hexane) as a peroxide in an amount of 2.5 mass%. To 100 parts by mass of the above mixture, 0.05 part by mass of tetrakis[methylene-3-(3,5-di-t-butyl-4-hydroxyphenyl)propionate] methane (Sumilizer BP-101) and 0.01 part by mass of Irganox 1076 (manufactured by Ciba Specialty Chemicals) were added and mixed for 3 minutes in a Henschel mixer, followed by feeding it into a twin screw extruder having a temperature adjusted to 260°C, where it was melt-kneaded to provide a master chip.

Next, 70 mass% of the above master chip was mixed with 20 mass% of a propylene-ethylene random copolymer and 10 mass% of a propylene-butene copolymer elastomer, and the mixture was fed into a twin screw extruder maintained at a temperature of 260°C and then melt-kneaded.

Subsequently, the base layer resin and the seal layer resin melt-kneaded above were extruded at a ratio of 6:1 through a multilayer T-die with two layer orifice at 250°C at a rate of 60 m/min. The extrudate was cooled and solidified by bringing it into contact with a cooling roll at 45°C, followed by subjecting the base layer surface to corona discharge treatment to provide a polypropylene based unstretched film with a thickness of 60 µm.

The resulting polypropylene based unstretched film was processed by the same procedure as in Example 7 to produce a laminated sheet in combination with a biaxial stretched polyamide film. Characteristics of the polypropylene based unstretched film obtained above and those of a laminated sheet produced in combination with a heat resistant base material are shown in Table 2.

The resulting polypropylene based unstretched film exhibited favorable low temperature heat sealability, favorable high temperature blocking resistance, favorable heat seal strength at 170°C in a laminated sheet, favorable low temperature impact resistance, favorable bag formability, and favorable steam permeability during heating in a microwave oven, indicating that it satisfied all the required characteristics of the present invention to serve for retort packaging.

### [Comparative example 5]

Except for, as compared to Example 7, forming a base layer using the propylene-ethylene block copolymer (a1) in an amount of 40 mass% and the propylene-ethylene random copolymer (a3) in an amount of 30 mass%, the same procedure as in Example 7 was carried out to provide a polypropylene based unstretched film. A laminated sheet was also prepared in the same way as in Example 1. Characteristics of the polypropylene based unstretched film obtained above and those of a laminated sheet produced in combination with a heat resistant base material are shown in Table 2.

For the resulting polypropylene based unstretched film, the content of the propylene-ethylene block copolymer in the base layer was so low that bags formed thereof occasionally suffered from a liquid leakage during heat treatment performed at 130°C and were poor in low temperature impact resistance.

### [Comparative example 6]

Except for, as compared to Example 7, forming a base layer using a resin mixture containing the propylene-ethylene random copolymer (a3) in an amount of 70 mass% and the linear low density polyethylene (b1) of the polyethylene based resin in an amount of 30 mass%, the same procedure as in Example 1 was carried out to provide a polypropylene based unstretched film. A laminated sheet was also prepared in the same way as in Example 7. Characteristics of the polypropylene based unstretched film obtained above and those of a laminated sheet produced in combination with a heat resistant base material are shown in Table 2.

Since the melting temperature peak of the base layer in the resulting polypropylene based unstretched film was low, the bag making speed decreased as the bags being made suffered from deformation due to the heat used in the bag making process, resulting in a decrease in the bag opening retention rate.

### [Comparative example 7]

As compared to Example 7, 100 parts by mass of a resin mixture for the seal layer was prepared by mixing the ethylene-propylene random copolymer adopted as the propylene-propylene random copolymer (a5) in an amount of 80 mass% and the linear low density polyethylene adopted as the polyethylene based resin (b1) in an amount of 20 mass%, and then 0.4 part by mass of spherical silica particles with a diameter of 2 µm, adopted as an inorganic particle component, 0.05 part by mass of tetrakis[methylene-3-(3,5-di-t-butyl-4-hydroxyphenyl)propionate]methane (Sumilizer BP-101), and 0.01 part by mass of Irganox 1076 (manufactured by Ciba Specialty Chemicals) were added. The resulting mixture was mixed for 3 minutes in a Henschel mixer, then fed into a twin screw extruder having a temperature adjusted to 260°C, melt-kneaded, extruded at 250°C through a T-die at a rate of 60 m/min, and cooled and solidified by bringing it in contact with a cooling roll maintained at 45°C. Subsequently, one side thereof was subjected to corona discharge treatment to provide a polypropylene based unstretched film with a thickness of 60 µm. A laminated sheet was also prepared in the same way as in Example 7. Characteristics of the polypropylene based unstretched film obtained above and those of a laminated sheet produced in combination with a heat resistant base material are shown in Table 2.

In the resulting polypropylene based unstretched film, the seal layer exhibited a melting temperature peak of 150°C, had an average roughness Ra of 0.04 µm, and had a peak count of 68 per 10 mm² for peaks with a height of 0.3 µm or more, which led to a blocking shear strength at 130°C of 42 N/12 cm² to indicate an inferior high temperature blocking resistance, an inferior bag making speed of 35 spm to show poor bag formability, a high heat seal strength in an atmosphere at 100°C, and a poor steam permeability during heating in a microwave oven.

### [Comparative example 8]

Except for, as compared to Example 7, forming a seal layer using the ethylene-propylene-butene random copolymer adopted as the propylene-ethylene random copolymer (a6) with a melting point peak of 132°C instead of the propylene-ethylene random copolymer (a3) with a melting point peak of 142°C, the same procedure as in Example 7 was carried out to provide a polypropylene based unstretched film. A laminated sheet was also prepared in the same way as in Example 1. Characteristics of the polypropylene based unstretched film obtained above and those of a laminated sheet produced in combination with a heat resistant base material are shown in Table 2.

In the resulting polypropylene based unstretched film, the seal layer exhibited a melting temperature peak of 132°C, and accordingly, it had a blocking shear strength at 130°C of 17 N/12 cm², indicating an inferior high temperature blocking resistance. The heat seal strength in the laminated sheet at 170°C was as small as 20 N/15 mm, and accordingly, a leakage of the liquid contents occurred during retort processing of bags performed at 130°C. The bag making speed was also as small as 35 spm, showing poor bag formability.

### [Comparative example 9]

Except for, as compared to Example 7, forming a seal layer using the high-pressure low density polyethylene adopted as the polyethylene based resin (b3), instead of the linear low density polyethylene adopted as the polyethylene based resin (b1), the same procedure as in Example 7 was carried out to provide a polypropylene based unstretched film. A laminated sheet was also prepared in the same way as in Example 1. Characteristics of the polypropylene based unstretched film obtained above and those of a laminated sheet produced in combination with a heat resistant base material are shown in Table 2.

In the resulting polypropylene based unstretched film, the seal layer had an average roughness Ra of as small as 0.08 µm, and the high-pressure low density polyethylene used in combination had a melting temperature of as low as 106°C. As a result, it had a blocking shear strength at 130°C of 25 N/12 cm², indicating an inferior high temperature blocking resistance. The heat seal strength in the laminated sheet at 170°C was also as small as 20 N/15 mm, and accordingly, a leakage of the liquid contents occurred during retort processing of bags performed at 130°C. The bag making speed was as small as 37 spm, showing poor bag formability.

### [Comparative example 10]

Except for, as compared to Example 7, forming a seal layer using 100 parts by mass of a resin mixture containing the ethylene-propylene block copolymer (a1) in an amount of 85 mass%, a high density polyethylene in an amount of 5 mass%, and the ethylene-butene copolymer elastomer (c1) in an amount of 10 mass%, the same procedure as in Example 1 was carried out to provide a polypropylene based unstretched film. A laminated sheet was also prepared in the same way as in Example 7. Characteristics of the polypropylene based unstretched film obtained above and those of a laminated sheet produced in combination with a heat resistant base material are shown in Table 2.

Although in the resulting polypropylene based unstretched film, the seal layer had an average roughness Ra and the peak count for peaks with a height of 0.3 µm or more were in the range specified for the present invention, it had a melting temperature of as high as 162°C, and as a result, the temperature at which the heat seal strength reaches and exceeds 3 N/15 mm was as high as 162°C, leading to an inferior low temperature heat sealability. The heat seal strength in the laminated sheet at 170°C was as small as 4 N/15 mm, and as a result, it was impossible to produce a bag under the bag making conditions specified above.

### [Table 1]

**[Table 1]**

| | item | unit | Examp le 1 | Examp le 2 | Examp le 3 | Examp le 4 | Examp le 5 | Examp le 6 | Comparative example 1 | Comparative example 2 | Comparative example 3 | Comparative example 4 |
|---|---|---|---|---|---|---|---|---|---|---|---|---|
| properties of film | thickness | µm | 60 | 60 | 60 | 60 | 60 | 60 | 60 | 60 | 60 | 60 |
| | melting temperature peak | °C | 142 | 135 | 142 | 142 | 142 | 142 | 142 | 132 | 142 | 163 |
| | average surface roughness Ra | µm | 0.29 | 0.24 | 0.17 | 0.13 | 0.20 | 0.69 | 0.04 | 0.23 | 0.08 | 0.17 |
| | peak count for peaks with height of 0.3 µm or more | number/10 mm² | 2690 | 1534 | 870 | 150 | 1020 | 1350 | 68 | 2240 | 2315 | 85 |
| | blocking shear strength at 130°C | g/12 mm² | 2.4 | 4.5 | 8.5 | 12 | 15 | 13 | 42 | 17 | 25 | 40 |
| | temperature at which heat seal strength reaches and exceeds 3 N/15 mm | °C | 144 | 137 | 145 | 143 | 144 | 142 | 140 | 135 | 140 | 170 |
| properties of laminated sheet | bag making speed | spm | 45 | 45 | 45 | 40 | 45 | 45 | 35 | 32 | 37 | 0 |
| | heat seal strength at 170°C | N/15mm | 60 | 45 | 43 | 55 | 45 | 47 | 45 | 20 | 47 | 4 |
| | liquid leakage after heat treatment at 130°C | visual confirmation | ○ | ○ | ○ | ○ | ○ | ○ | ○ | × | ○ | - |

### [Table 2]

**[Table 2]**

| | | item | unit | Exam ple 7 | Exam ple 8 | Examp le 9 | Exampl e 10 | Exampl e 11 | Exampl e 12 | Exampl e 13 | Exampl e 14 | Exampl e 15 | Comparative example 5 | Comparative example 6 | Comparative example 7 | Comparative example 8 | Comparative example 9 | Comparative example 10 |
|---|---|---|---|---|---|---|---|---|---|---|---|---|---|---|---|---|---|---|
| properties of polypropylene based unstretched film | | thickness | µm | 60 | 60 | 60 | 60 | 60 | 60 | 60 | 60 | 60 | 60 | 60 | 60 | 60 | 60 | 60 |
| | base layer | BPP content^{*} | mass% | 50 | 60 | 50 | 50 | 50 | 50 | 50 | 50 | 72 | 40 | 0 | 50 | 50 | 50 | 50 |
| | | melting temperature peak | °C | 162 | 162 | 155 | 162 | 162 | 162 | 162 | 162 | 162 | 162 | 142 | 162 | 162 | 162 | 162 |
| | seal layer | melting temperature peak | °C | 142 | 142 | 142 | 135 | 142 | 142 | 142 | 142 | 142 | 142 | 142 | 150 | 132 | 142 | 162 |
| | | average surface roughness Ra | µm | 0.30 | 0.30 | 0.30 | 0.24 | 0.17 | 0.13 | 0.20 | 0.69 | 0.25 | 0.28 | 0.28 | 0.04 | 0.23 | 0.08 | 0.17 |
| | | peak count for peaks with height of 0.3 µm or more | number/10 mm² | 2313 | 2313 | 2313 | 1534 | 870 | 150 | 1020 | 1350 | 739 | 2135 | 2235 | 68 | 2240 | 2315 | 250 |
| | | blocking shear strength at 130°C | g/12 mm² | 3.2 | 3.2 | 3.2 | 4.5 | 8.5 | 12 | 15 | 13 | 3.4 | 3.3 | 4.5 | 42 | 17 | 25 | 6 |
| | | temperature at which heat seal strength reaches and exceeds 3 N/15 mm | °C | 143 | 143 | 144 | 137 | 145 | 143 | 144 | 142 | 140 | 143 | 143 | 140 | 135 | 140 | 165 |
| properties of laminated sheet | | baa making speed | spm | 45 | 45 | 45 | 45 | 45 | 43 | 40 | 45 | 45 | 40 | 35 | 32 | 32 | 37 | 0 |
| | | heat seal strength at 170°C | N/15 mm | 60 | 55 | 50 | 40 | 60 | 55 | 45 | 60 | 50 | 45 | 40 | 45 | 20 | 20 | 4 |
| | | liquid leakage after heat treatment at 130°C | visual confirmation | ○ | ○ | ○ | ○ | ○ | ○ | ○ | ○ | ○ | × | ○ | ○ | × | × | - |
| | | heat seal strength in atmosphere at 100°C | N/15 mm | 25 | 27 | 20 | 20 | 25 | 26 | 25 | 25 | 25 | 23 | 23 | 35 | 15 | 23 | - |
| | | bag opening retention rate (low temperature impact resistance) | % | 70 | 65 | 60 | 50 | 70 | 70 | 70 | 70 | 80 | 30 | 10 | 60 | 40 | 45 | - |

| | | | | | | | | | | | | | | | | | | |
|---|---|---|---|---|---|---|---|---|---|---|---|---|---|---|---|---|---|---|
| *: BPP stands for propylene-ethylene block copolymer. | | | | | | | | | | | | | | | | | | |

### INDUSTRIAL APPLICABILITY

The present invention can provide a polypropylene based unstretched film and a laminated sheet produced thereof which are excellent in terms of low temperature heat sealability, high temperature blocking resistance, and bag making processability and accordingly suitable for production of environmentally conscious packaging bags for retort food packaging composed of a reduced number of layers and which also serve to produce laminated sheets excellent in terms of heat seal strength at 170°C, low temperature impact resistance, steam permeability during heating in a microwave oven, and applicability to retort processing.

## Claims

1. A polypropylene based unstretched film including, as the main component, a propylene based random copolymer having a melting temperature peak of 135°C or more and 145°C or less, and having, on at least one surface, a heat seal surface having an average film surface roughness Ra of 0.1 µm or more and a peak count of 100 or more per 10 mm² for peaks with a height of 0.3 µm or more.

2. A polypropylene based unstretched film as set forth in claim 1, wherein two heat seal surfaces combined together exhibit a blocking shear strength at 130°C of 15 N/12 cm² or less.

3. A polypropylene based unstretched film including two layers, that is, a base layer and a seal layer, wherein the base layer contains a propylene-ethylene block copolymer in an amount of 50 mass% or more and has a melting temperature peak of 150°C or more whereas the seal layer has a melting temperature peak in the range of 135°C to 145°C, with the surface of the seal layer having an average surface roughness Ra of 0.1 µm or more and a peak count of 100 or more per 10 mm² for peaks with a height of 0.3 µm or more and serving as a heat seal surface.

4. A polypropylene based unstretched film as set forth in either claim 1 or 3, wherein the heat seal onset temperature in a heat sealing process of two heat seal surfaces combined together, namely, the temperature at which the heat seal strength reaches and exceeds 3 N/15 mm, is 150°C or less.

5. A polypropylene film as set forth in claim 1, wherein the thickness of the film is 20 µm or more and 150 µm or less.

6. A polypropylene film as set forth in claim 3, wherein the thickness of the film is 20 µm or more and 150 µm or less, with the thickness ratio between the base layer and the seal layer being in the range of 9:1 to 3:1.

7. A laminated sheet including a polypropylene based unstretched film as set forth in either claim 1 or 3 laminated on a heat resistant base material having a melting point of 160°C or more, with a heat seal strength at 170°C is 23 N/15 mm or more.

8. A laminated sheet as set forth in claim 7, wherein the heat resistant base material is at least one selected from the following: a film selected from the group consisting of biaxially stretched polyamide films, biaxially stretched polyethylene terephthalate films, biaxially stretched polypropylene films, biaxially stretched polybutylene terephthalate films, biaxially stretched polyester/polyamide hybrid films, uniaxially stretched polyamide films, uniaxially stretched polyethylene terephthalate films, uniaxially stretched polypropylene films, and uniaxially stretched polybutylene terephthalate films; one film thereof having a layer formed by metal vapor deposition, inorganic vapor deposition, transparent metal oxide vapor deposition, or gas barrier resin coating; and synthetic paper and aluminum foil.
